# EUROPEAN PATENT APPLICATION

(11) **EP 1 600 680 A1**
(43) Date of publication of application: **30.11.2005**
(21) Application number: 04104826.5
(22) Date of filing: 01.10.2004
(51) Int. Cl.: F16L 23/04, F16L 23/08

(54) **V-Band clamp**

(30) Priority: 27.05.2004 US 856369
(71) Applicant: Donaldson Company, Minneapolis, Minnesota 55440-1299 (US)
(72) Inventor: Wagner, Wayne M., 55124, Minnesota (US)
(74) Representative: Eisenführ, Speiser & Partner

(57) **Abstract**

A device (120) for clamping together flanged conduits (140,141) includes a band structure (123) including one or more channel members (136a,136b,136c), that curve about a center reference point (125). The channel members are adapted to receive the flanges (142,143) of the conduits. The device also includes a fastener (132) for tightening the channel members about the conduits. The device further includes a plurality of centering members (160) that project into an interior region defined by the band structure. The centering members are adapted to engage the flanges to provide alignment between the conduits as the conduits are clamped together.

## Description

### Technical Field

The principles disclosed herein relate to clamps for coupling conduits such as pipes or ducts. More particularly, the disclosure relates to V-band clamps used to couple flanged conduits.

### Background of the Invention

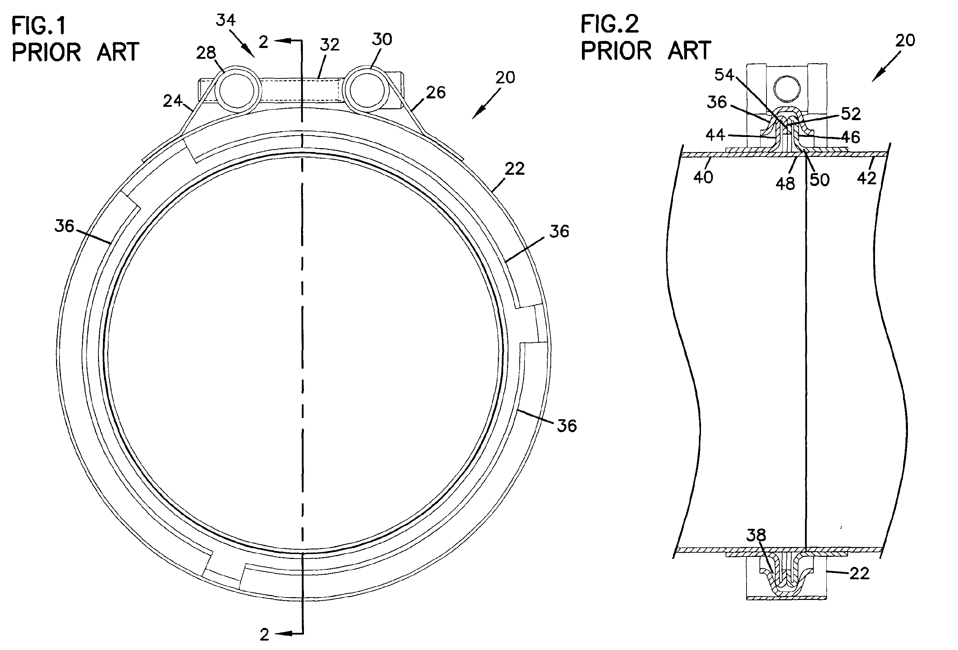

Figure 1 illustrates a prior art V-band clamp 20 for coupling flanged conduits. The clamp 20 includes an outer strap 22 having first and second looped ends 24 and 26. First and second trunions 28, 30 are respectively mounted within the first and second looped ends 24, 26. The first trunion 28 defines an internally threaded opening, and the second trunion 30 defines a clearance opening. The first and second looped ends 24, 26 are fastened together by a bolt 32 that traverses a gap 34 between the looped ends 24, 26. The bolt 32 passes through the clearance opening of the second trunion 30 and is threaded into the internally threaded opening of the first trunion 28. The clamp 20 is tightened by threading the bolt 32 into the first trunion 28 such that the gap 34 closes.

The clamp 20 also includes three channel members 36 secured to the inner side of the strap 22. Each of the channel members 36 defines a generally V-shaped channel 38 (see Fig. 2) that opens inwardly toward the center of the clamp. The channels 38 provide a means for receiving the flanges of a pair of flanged conduits desired to be coupled together.

Figure 2 shows the clamp 20 being used to clamp a first conduit 40 to a second conduit 42. The conduits 40, 42 respectively include flanges 44, 46. To clamp the conduits 40, 42 together, the flanges 44, 46 are placed in an abutting end-to-end relationship to form a joint, and the clamp 20 is then mounted over the joint with the abutting flanges 44, 46 inserted within the channels 38 of the channel members 36. By tightening the bolt 32, the clamp 20 draws the flanges 44, 46 together to provide a secure connection between the conduits 40, 42.

During the clamping process, it is desirable to maintain alignment between the conduits 40, 42. To assist in maintaining alignment, the first conduit 40 includes a pilot portion 48 that extends within a base region 50 of the flange 46. In this manner, the base region 50 contains the pilot portion 48 thereby assisting in maintaining alignment between the two conduits 40, 42. However, tolerances between the outer diameter of the pilot portion 48 and the inner diameter of the base region 50 can prevent exact alignment between the two conduits 40, 42 from being maintained. Further, the axial overlap between the pilot portion 48 and the base region 50 presents difficulties in disassembling the two conduits 40, 42 because axial retraction is required to disengage the conduits 40, 42.

During the clamping process, end faces 52, 54 of the flanges 44, 46 are drawn together in an abutting relationship. Effective sealing between the end faces 52, 54 can be difficult to achieve in prior art clamps because of misalignment between the conduits. This is particularly problematic in situations in which the face contact surfaces 52, 54 of the flanges are not exactly perpendicular relative to the axes of the conduits (e.g., the flanges are often slightly convex). This causes a line-contact of the abutting flanges requiring near perfect diametrical alignment to provide effective sealing.

### Summary

One inventive aspect of the disclosure relates to conduit clamps having structures or members for self-centering flanged conduits during the clamping process.

Another inventive aspect of the disclosure relates to conduit clamps and to clamping systems having enhanced sealing capabilities.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### Brief Description of the Drawings

Fig. 1 is an end view of a prior art clamp being used to interconnect two flanged pipes;
Fig. 2 is a cross-sectional view taken along section line 2-2 of Fig. 1;
Fig. 3 is an end view of a clamp having features that are examples of inventive aspects in accordance with the principles of the present disclosure;
Fig. 4 is a left side view of the clamp of Fig. 3;
Fig. 5 is a top view of the clamp of Fig. 3;
Fig. 6 shows the clamp of Fig. 3 mounted at a joint between two flanged conduits, the clamp has not yet been finally tightened;
Fig. 7 is a cross-sectional view taken along section line 7-7 of Fig. 6;
Fig. 8 is a cross-sectional view taken along section line 8-8 of Fig. 6;
Fig. 9 illustrates the clamp of Fig. 6 after the clamp has been finally tightened about the flanged conduits;
Fig. 10 is a cross-sectional view taken along section line 10-10 of Fig. 9;
Fig. 11 is a cross-sectional view taken along section line 11-11 of Fig. 9;
Fig. 12 is an end, partial cut-away view of the band of the clamp structure of Fig. 5;
Fig. 13 is a left side view of the clamp of Fig. 12;
Fig. 14 is a cross-sectional view taken along section line 14-14 of Fig. 12;
Fig. 15 is an enlarged view of a portion of the band of Fig. 12;
Fig. 16 is a plan view of a portion of the strap of the band of Fig. 12, the plan view shows a tab integrally formed with the strap;
Fig. 17 is an end view of a first trunion used by the clamp of Fig. 3, the trunion includes an internally threaded opening;
Fig. 18 is a left side view of a trunion of Fig. 17;
Fig. 19 is a cross-sectional view taken along section line 19-19 of Fig. 17;
Fig. 20 is an end view of a second trunion used by the clamp of Fig. 3, the second trunion finds an internal clearance hole;
Fig. 21 is a left side view of the trunion of Fig. 20;
Fig. 22 is a cross-sectional view taken along section line 22-22 of Fig. 20;
Fig. 23 illustrates a conduit joint with aluminum tape mounted between the flanged pipes to provide an enhanced seal between the end faces of the flanges;
Fig. 24 illustrates a partial cross-sectional view of a vehicle exhaust system including clamps having features that are examples of inventive aspects in accordance with the principles of the present disclosure;
Fig. 25 is an end view of the exhaust system of Fig. 24;
Fig. 26 is an end view of another clamp having features that are examples of inventive aspects in accordance with the principles of the present disclosure;
Fig. 27 is a left side view of the clamp of Fig. 26;
Fig. 28 is a left side view of the band structure of the clamp of Fig. 26;
Fig. 29 is a top view of the band structure of Fig. 28;
Fig. 30 is a cross-sectional view taken along section line 30-30 of Fig. 28;
Fig. 31 is an enlarged view of a portion of Fig. 30 showing an inwardly projecting centering tab;
Fig. 32 is a cross-sectional view taken along section line 32-32 of Fig. 30;
Fig. 33 shows a third clamp having features that are examples of inventive aspects in accordance with the principles of the present disclosure, the clamp is shown mounted at a joint between two flanged conduits, the clamp has not yet been finally tightened;
Fig. 34 is a cross-sectional view taken along section line 34-34 of Fig. 33;
Fig. 35 shows the clamp of Fig. 33 after the clamp has been finally tightened about the flanged conduits;
Fig. 36 is a cross-sectional view taken along section line 36-36 of Fig. 35;
Fig. 37 is a detailed view of a portion of the clamp of Figs. 33 and 34 showing an example centering member; and
Figs. 38-41 show other example centering member configurations adapted for use with the clamp of Figs. 33-36.

### Detailed Description

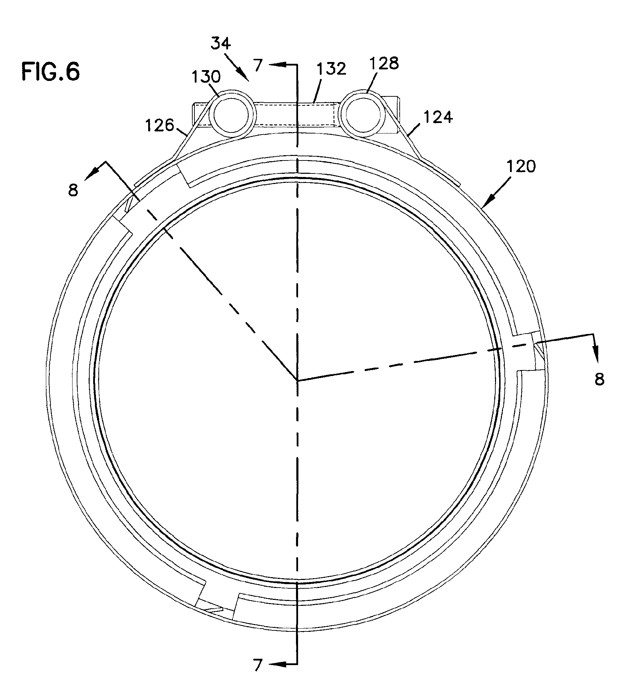

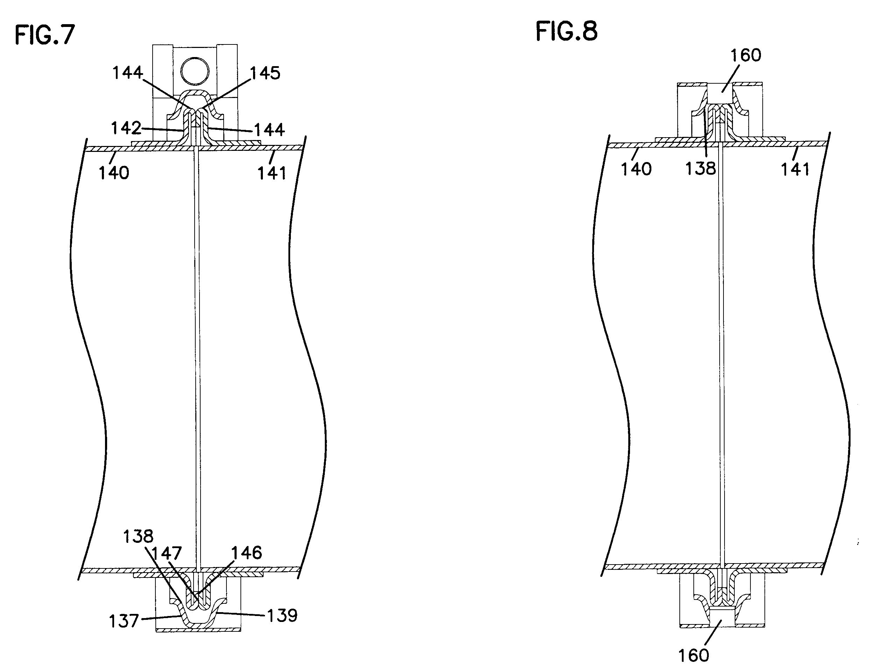

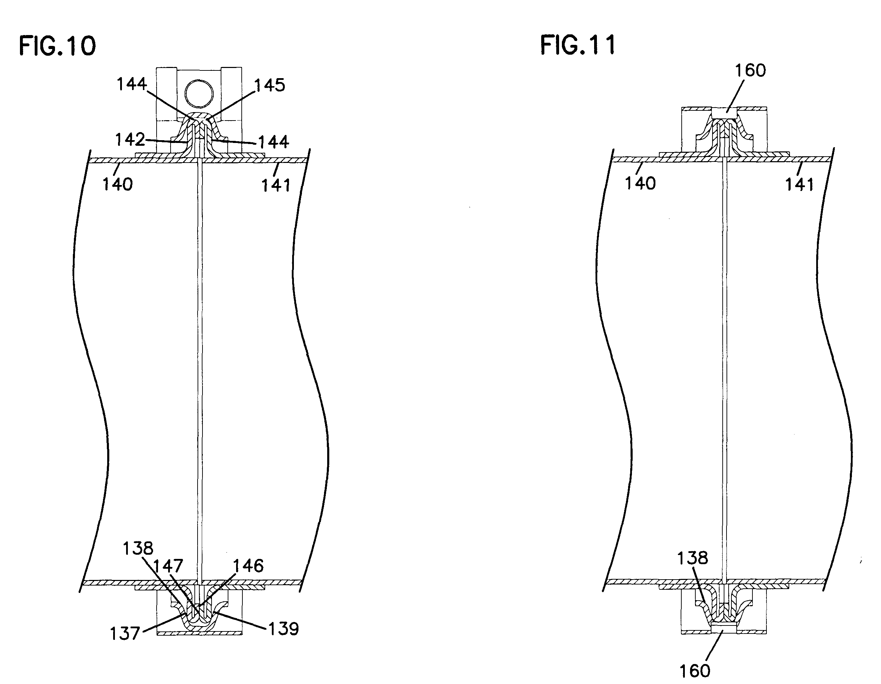

Figs. 3-5 illustrate a clamp 120 having features that are examples of inventive aspects in accordance with the principles of the present disclosure. The clamp 120 includes a band structure 123 that encircles a center reference point 125. The band structure 123 includes an outer strap 122 and three channel segments 136a, 136b and 136c that are secured to the inner side of the strap 122. The channel segments 136a-136c each define channels 138 (e.g., generally V-shaped channels as shown in Figs. 7, 8, 10, 11 and 14) adapted to receive the flanges of two abutting flanged conduits desired to be joined together. The strap 122 includes looped ends 124, 126 in which first and second trunions 128, 130 are mounted. A threaded fastener 132 for tightening and loosening the clamp 120 extends between the looped ends 124, 126 and through the trunions 128, 130. The clamp 120 also includes centering members such as centering tabs 160 that project inwardly from the band structure 123 for maintaining/providing conduit alignment during the clamping process.

Figs. 6-11 illustrate the clamp 120 being used to couple together first and second conduits 140, 141. The conduits 140, 141 respectively include end flanges 142, 143 having outer rims 144, 145 and end faces 146, 147. Figs. 6-8 show the clamp 120 mounted about the conduits 140, 141 prior to final tightening. In the pre-tightened condition, the end faces 146, 147 of the end flanges 142, 143 oppose one another and the centering tabs 160 of the clamp 120 engage the outer rims 144, 145 of the flanges 142, 143. By engaging the outer rims 144, 145, the tabs 160 function to center the flanges 142, 143 within the clamp 120 and to maintain alignment between the conduits 140, 141. Prior to final tightening, the tabs 160 also maintain an offset between the end flanges 142, 143 and side walls 137, 139 of the channels 138 (see Figs 7 and 8).

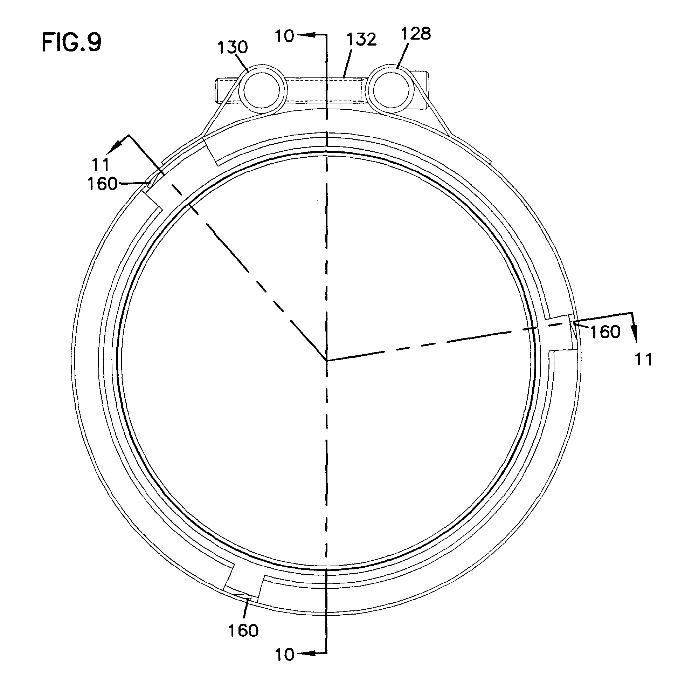

To tighten the clamp 120, the fastener 132 is turned within the trunions 128, 130 causing the looped ends 124, 126 of the strap 122 to be drawn together. As the clamp 120 is tightened, the diameter of the band structure 123 decreases, such that the offset between the end flanges 142, 143 and the side walls 137, 139 of the channels 138 reduces. As the offset reduces, the centering tabs 160 are forced to flex outwardly (e.g., by contact with the rims 144, 145) from the position of FIG. 6 to the position of FIG. 9. During the entire tightening process, the centering tabs 160 continue to engage the outer rims 144, 145 of the end flanges 142, 143 such that the end flanges 142, 143 remain centered within the clamp 120 and aligned relative to one another. In this manner, the tabs 160 simultaneously apply radially inwardly directed forces to the rims 144, 145 at discrete locations about the circumference of the flanges 142, 143. Such forces are applied continuously to the rims exclusively at the discrete tab locations until the tabs deflect to an angle where the flanges 142, 144 engage the channel side walls 137, 139. The tightening process continues until the end flanges 142, 143 are clamped firmly against the side walls 137, 139 of the channels 138a-c as shown in Figs. 9-11.

During the tightening process, the tabs 160 apply the radial centering forces to the rims 144, 145 before the flanges 142, 143 are axially compressed together by the channels 138 a-c. Thus, the flanges 142, 143 can be centered without encountering resistance to movement that is present once the flanges have been axially clamped together.

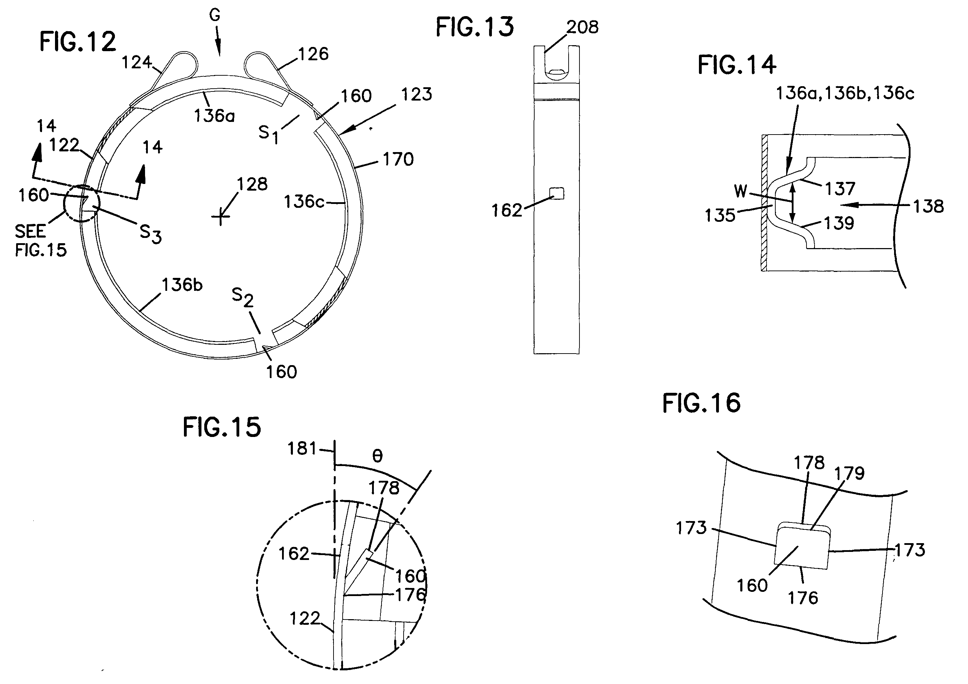

Referring to Figs. 12-16, the band structure 123 is shown including three of the channel segments 136a-136c secured to the inner surface of the strap 122. It will be appreciated that in alternative embodiments, more or fewer than three of the channel segments 136 can be used. In certain embodiments, a single channel member may be used. In such embodiments, a fastening structure can be secured to the channel member and the outer strap 122 can be eliminated. In certain embodiments, the segments 136 can be made of a material such as steel, stainless steel, aluminized steel, or other materials.

Referring to Fig. 12, the strap 122 includes a main body 170 that extends from the first looped end 124 to the second looped end 126 and generally encircles the center reference point 128. The looped ends 124, 126 are formed by looping back the end portions of the strap 122 and securing (e.g., welding) the end most portions to the outer surface of the main body 170. In certain embodiments, the strap 122 can be made of a material such as steel, stainless steel, aluminized steel or other materials.

The channel segments 136a-136c are secured to the inner side of the main body 170 of the strap 122 by known techniques such as welding. The channel segment 136a is welded to the strap 122 adjacent the first looped end 124 but is not welded adjacent the second looped end 126. This allows the second looped end 126 to slide relative to the channel segment 136a when the clamp 120 is tightened. During the tightening process, a spacing S₁ between the channel segment 136a and the channel segment 136c closes as the looped end 126 slides relative to the channel segment 136a. It is preferred for the spacing S₁ to be offset from a gap G defined between the looped ends 124, 126. The band structure 123 also includes a spacing S₂ between the segments 136b and 136c, and third spacing S₃ located between the segments 136a and 136b. The spacings S₂ and S₃ function to provide flex points for facilitating flexing the clamp open to mount the clamp over a joint between two conduits. The spacings S₂ and S₃ do not decrease in size when the clamp 120 is tightened.

As shown in Fig. 14, the channels 138 defined by the channel segments 136a-136c include bases 135 and opposing side walls 137, 139 that define generally V-shaped cross-sectional profiles. The bases 135 define closed ends of the channels 138, and the side walls 137, 139 spread away from the bases 135 to define open ends that face generally towards the center reference point 128. It will be appreciated that the cross-sectional profile of the channels can be varied without departing from the principles of the present disclosure.

Referring again to Fig. 12, the pipe centering tabs 160 preferably include a plurality of the tabs spaced about the diameter of the band structure 123. Preferably, the tabs 160 are uniformly spaced about the diameter of the band structure 123. For example, as shown in Fig. 12, the tabs 160 include three tabs spaced approximately 120° apart from one another. In the depicted embodiment, the tabs 160 are located at the spacings S₁, S₂ and S₃. Although three tabs are preferred, other embodiments can use more or fewer than 3 tabs.

In the embodiment of Fig. 12, the tabs 160 are integrally formed with the strap 122. For example, the tabs can be cut into the strap, punched into the strap or otherwise integrally formed with the strap. Referring to Figs. 12 and 15, the tabs 160 have a cantilevered configuration with a base end 176 that is integral with the strap 122 and a free end 178 positioned opposite from the base end 176. As depicted in Fig. 16, the tab 160 is generally rectangular and includes generally parallel sides 173 that extend from the base end 176 to the free end 178. The free end 178 includes and edge 179 that extends in an axial direction (i.e., in a direction generally parallel to the axes defined by two conduits as the conduits are clamped by the clamp 120). In this manner, the edge 179 is preferably aligned to extend in a direction generally across a width W (shown in Fig. 14) of the channels 138. This arrangement allows the edge 179 to simultaneously engage the outer rims 144 and 145 of both end flanges 142, 143 when the band structure 123 is mounted over the conduits 140, 141.

As shown in Fig. 15, the tabs 160 project from the band structure 123 into an interior region defined by the clamp 120. For example, the tabs are shown aligned at an angle θ relative to a reference line 181 (see Fig. 15). The reference line 181 is a line that is tangent to the band structure 123 at the base end 176 of the tab 160. In certain embodiments, the angle θ can be in the range of 10-60 degrees prior to tightening of the clamp 120. In other embodiments the angle θ is about 30 degrees prior to tightening of the clamp 120. When the clamp is tightened, the tabs 160 are forced to flex radially outwardly such that the angle θ reduces. As the tabs are forced radially outwardly, the tabs apply inwardly directed radial forces to the rims 144, 145. In certain embodiments, the angle θ can be in the range of 0-25 degrees after tightening of the clamp 120. In other embodiments, the angle θ can be about 15 degrees after tightening. It will be appreciated that the angles described above are merely examples, and that embodiments in accordance with the principles of the present disclosure can be made with tab angles outside the ranges specifically described above.

Referring to Figs 13, and 15, access openings 162 are defined through the main body of the strap 122 for accessing the tabs 160. By inserting a tool through the access openings 162, the tabs 160 can be bent inwardly to a desired angle θ. As the tabs 160 are forced inwardly, the tabs 160 flex about their base ends 176. The access openings 162 allow the tab angles to be initially set by the manufacturer, and also allow the tabs to be re-set after the clamp has been removed from a first use and is being prepared for re-use.

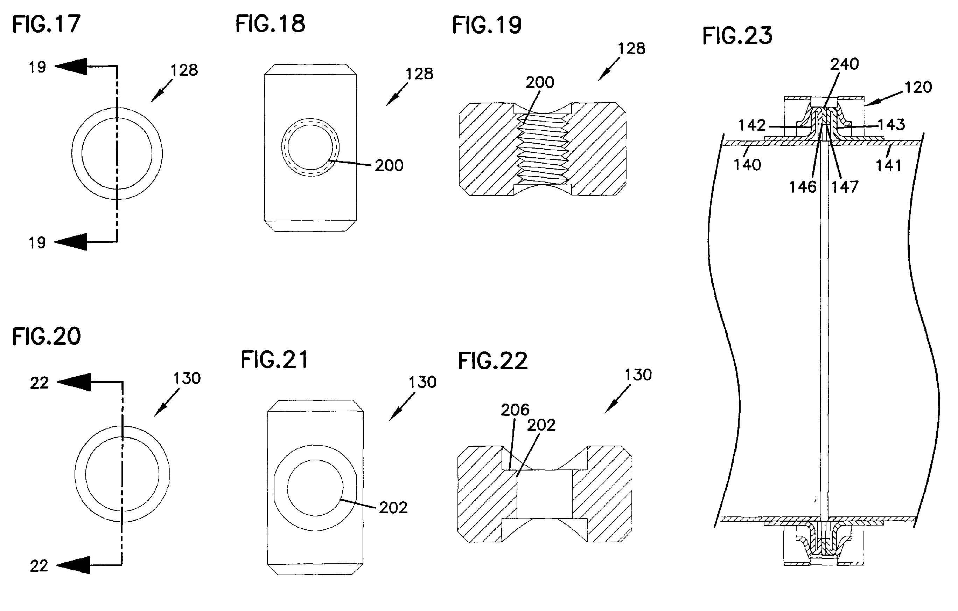

Referring to Figs. 17-19, the first trunion 128 of the clamp 120 is generally cylindrical and includes an internally threaded opening 200. In one non-limiting embodiment, the internal threads are coarse threads that match corresponding coarse threads on the fastener 132. The first trunion 128 is sized to fit within the first looped end 124 of the trap 122.

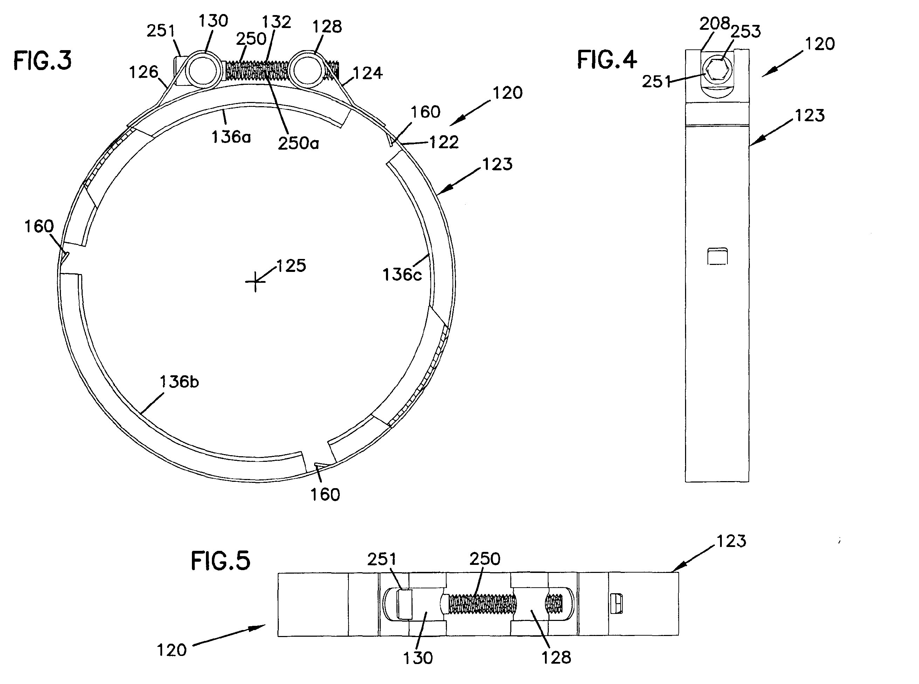

Figs. 20-22 illustrate the second trunion 130 of the clamp 120. The second trunion 130 defines a clearance opening 202. Fastener seats 206 are located at opposite sides of the clearance hole 202 such that the trunion 130 can be used bidirectionally. The second trunion 130 is preferably sized to fit within the second looped end 126 of the strap 122. Slots 208 through the looped ends 124, 126 (see Figs. 4 and 13) allow the threaded opening and the clearance opening to be accessed laterally through the looped ends 124, 126.

To tighten the clamp 120, the fastener 132 is inserted through the clearance opening 202 of the second trunion 130 and is threaded into the internally threaded opening 200 of the first trunion 128. As the fastener 132 is tightened, the looped ends 124, 126 are drawn together thereby closing the gap G between the ends 124, 126. In this manner, the diameter of the band structure 123 is reduced until a desired degree of clamping force has been applied to the conduits being clamped together.

In certain embodiments, the clamp 120 can be manufactured to provide relatively high clamping forces to generate an improved seal between the abutting end faces 146, 147 of the flanges of the conduits 140, 141. In certain embodiments, the clamp can generate sufficient force to cause the end faces 146, 147 to malleably deform to provide a seal at the end faces. In certain embodiments, the end flanges 142, 143 can be manufactured of materials such as aluminized stainless steel, stainless steel or aluminized steel. In the embodiment of Fig. 23, an intermediate sealing material 240 is placed between the end flanges 142, 143. In one embodiment, the sealing material 240 can include a layer of aluminum such as aluminum tape. In certain embodiments, the aluminum tape can be secured to either one of the end faces 146, 147, or both of the end faces 146, 147. The sealing material preferably extends along the end faces 146, 147 about the entire diameter of the conduits.

In certain embodiments, the threaded fastener 132 can include features for providing increased clamping force. For example, in one embodiment, the threaded fastener 132 can be made of a material having a tensile strength equal to or greater than Society of Automotive Engineers (SAE) Grade 5 steel (120,000 pounds per square inch (psi)) or a Metric equivalent (Metric strength grade designation 8.8 having a tensile strength value of 80 kilograms force per square millimeter (kgf/mm²)(113,760 psi)). In another embodiment, the threaded fastener 132 can be made of a material having a tensile strength equal to or greater than SAE Grade 8 steel (150,000 psi) or a Metric equivalent (Metric strength grade designation 10.9 having a tensile strength of 100 kgf/mm² (142,200 psi)). In still another embodiment, the threaded fastener 132 include a material having a tensile strength equal to or greater than SAE Grade 9 steel (170, 000 psi) or a Metric equivalent (Metric strength grade designation 12.9 having a tensile strength equal to 120 kgf/mm² (170,640 psi).

In the depicted embodiment of Figs. 3 and 4, the threaded fastener 132 includes a cap screw having a threaded portion 250 and a socket portion 251. A wrench opening 253 (e.g., a hex-socket/Allen wrench opening) for tightening the fastener 132 is provided in the socket portion 251. In a preferred embodiment, the threaded portion 250 includes coarse threads. The use of coarse threads can assist in preventing galling and stripping of the threads. Pursuant to the SAE standard for threaded fasteners, a coarse threaded ¼ inch diameter screw/bolt includes 20 threads per inch, a coarse threaded 5/16 inch diameter screw/bolt includes 18 threads per inch, and a coarse threaded 3/8 inch diameter screw/bolt includes 16 threads per inch. Pursuant to the British ISO screw thread standard, a coarse threaded 6 mm diameter screw/bolt has a pitch of 1 mm (25.4 threads per inch), a coarse threaded 8 mm diameter screw/bolt has a pitch of 1.25 mm (20.35 threads per inch) and a coarse threaded 10 mm diameter screw/bolt has a pitch of 1.5 mm (16.9 threads per inch).

While the above-identified fastener materials and threads are preferred for certain embodiments, it will be appreciated that other embodiments in accordance with the present disclosure may or may not include the specified materials or threads. For example, centering members can be incorporated into clamps having any type of fastener whether coarse threaded, fine threaded or unthreaded. Also, centering members can be used with clamps having fasteners having tensile strengths higher or lower than those specified above.

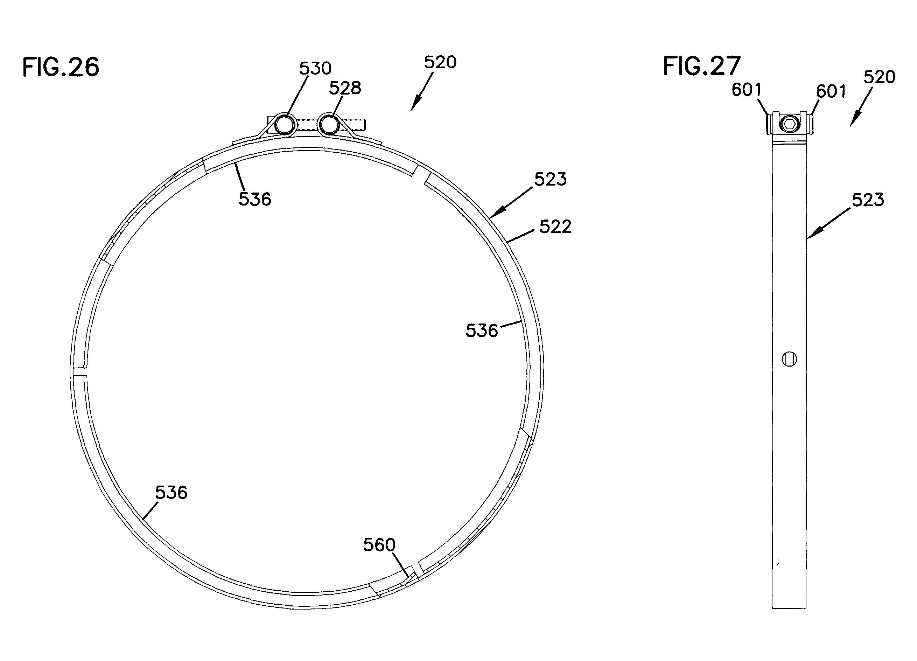

The threaded portion 250 can, in certain non-limiting embodiments, also include a spray coating, a dry coating, a non-metallic coating, a non-metallic spray coating, a dry lube (e.g., MoS₂, silicone dry lube, or Teflon based dry lube) or other layer 250a for reducing the coefficient of friction of the outer surface of the threaded portion. In one non-limiting embodiment, the surface coating can include a product sold under the name Armor Coat ™ by Metric Blue Product Group of Taylor, Michigan. Such materials can also be used to coat the interiors of the channels 38. Such lubricant materials can also be used, if desired, with the embodiments of Figs. 26-32 and Figs. 33-34.

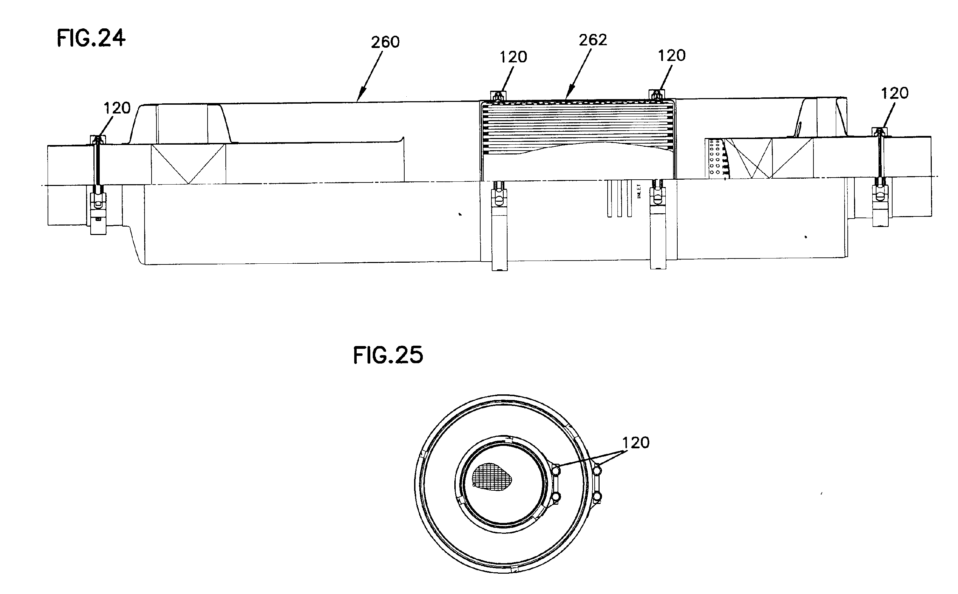

While the clamp 120 can be used for any type of flanged conduit, Figs. 24 and 25 show the clamp 120 being used in a vehicle exhaust system. For example, clamps 120 are shown coupling pipes to upstream and downstream ends of a muffler assembly 260. Clamps 120 are also shown being used to secure portions of the muffler assembly to the body of a catalytic converter 262, a filter, a catalyzed filter, a catalyzed diesel particulate filter or other structure.

While the clamp 120 has been shown used with flanged conduits that are generally round in cross section, it will be appreciated that other embodiments in accordance with the principles of the present disclosure can be adapted for use with ducts, pipes or other conduits of any number of different cross-sectional shapes such as oval.

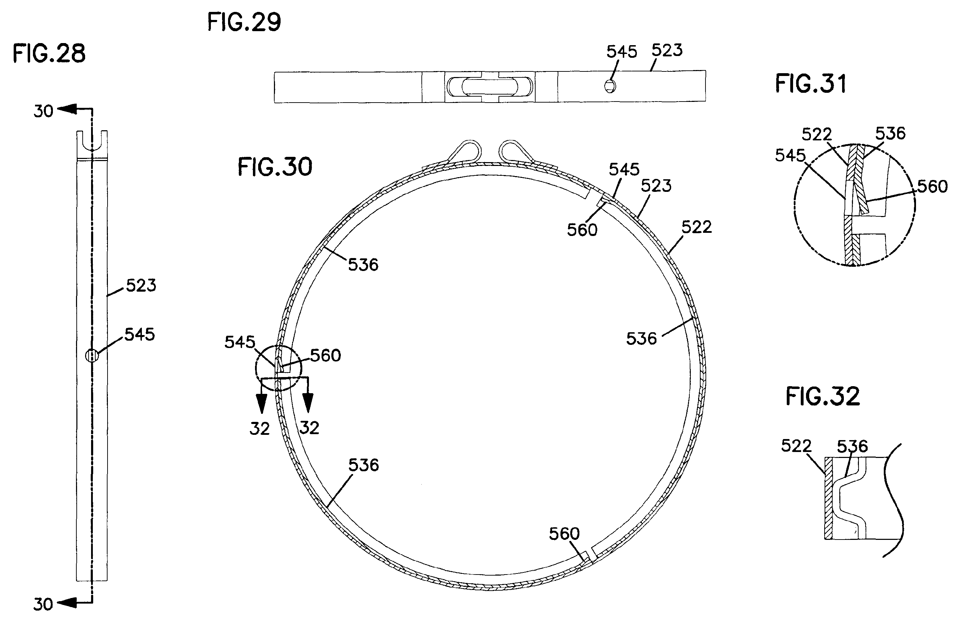

Figs. 26-32 illustrate an alternative clamp 520 having features that are examples of inventive aspects in accordance with the principles of the present disclosure. Similar to the initial embodiment, the clamp 520 includes a band structure 523 having a plurality of channels 536 secured to a strap 522. The strap 522 has looped ends. Trunions 528, 530 are mounted at the looped ends. The trunions 528, 530 include flared ends 601 (see Fig. 27) having a diameter larger than the diameter of the looped ends. The flared ends 601 are preferably flared after insertion of the trunions 528, 530 within the looped ends. In this manner, the flared ends 601 of the trunions 528, 530 prevent the trunions 528, 530 from being removed from the looped ends thereby reducing the number of loose parts when the clamp 520 has been disassembled. The clamp 520 also has a modified tab configuration. For example, the clamp includes tabs 560 that are integral with the channel pieces 536. As shown in Figs 30 and 31, the tabs 560 have a generally rectangular, cantilevered configuration with free ends positioned opposite from base ends. The base ends are integral with the channel segments 536. The strap 522 defines access openings 545 for allowing the angle of the tabs to be set.

The centering structures in accordance with the principles of the present disclosure can also be referred to as centering members, centering fingers, centering projections, centering elements, alignment members, alignment fingers, alignment projections, alignment elements, alignment members or other like terms. Channel segments in accordance with the principles of the present disclosure can also be referred to as channel members, flange receivers, flange receiving members, flange receptacles or like terms. Also, it will be appreciated that centering clamps in accordance with the principles of the present disclosure can be used to clamp either piloted or non-piloted flanged conduits.

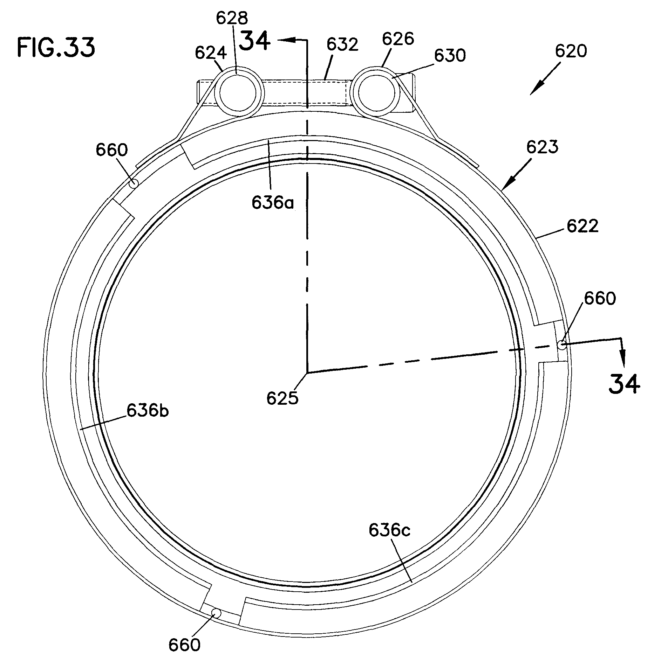

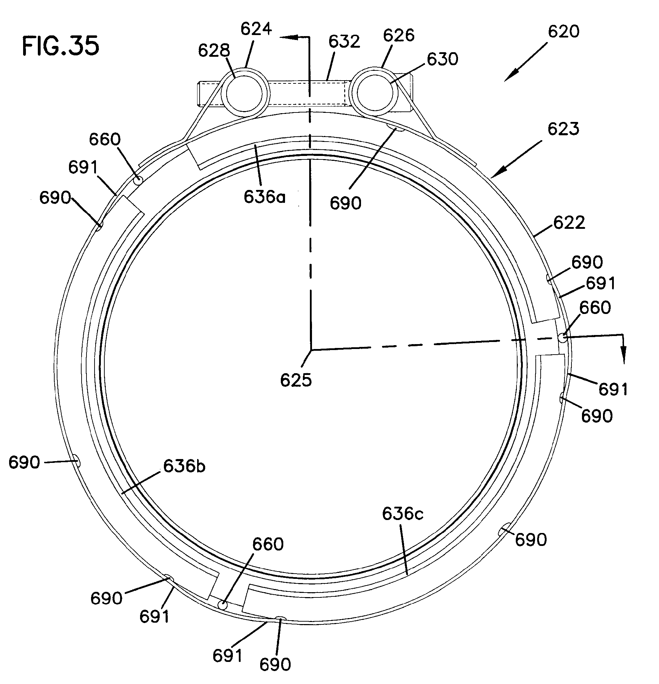

Figs. 33-36 illustrate a clamp 620 having features that are examples of inventive aspects in accordance with the principles of the present disclosure. The clamp 620 includes a band structure 623 that encircles a center reference point 625. The band structure 623 includes an outer strap 622 and three channel segments 636a, 636b and 636c that are secured to the inner side of the strap 622. The channel segments 636a-636c each define channels adapted to receive the flanges of two abutting flanged conduits desired to be joined together. The strap 622 includes looped ends 624, 626 in which first and second trunions 628, 630 are mounted. A threaded fastener 632 for tightening and loosening the clamp 620 extends between the looped ends 624, 626 and through the trunions 628, 630. The clamp 620 also includes centering members 660 that project inwardly from the band structure 623 for maintaining/providing conduit alignment during the clamping process.

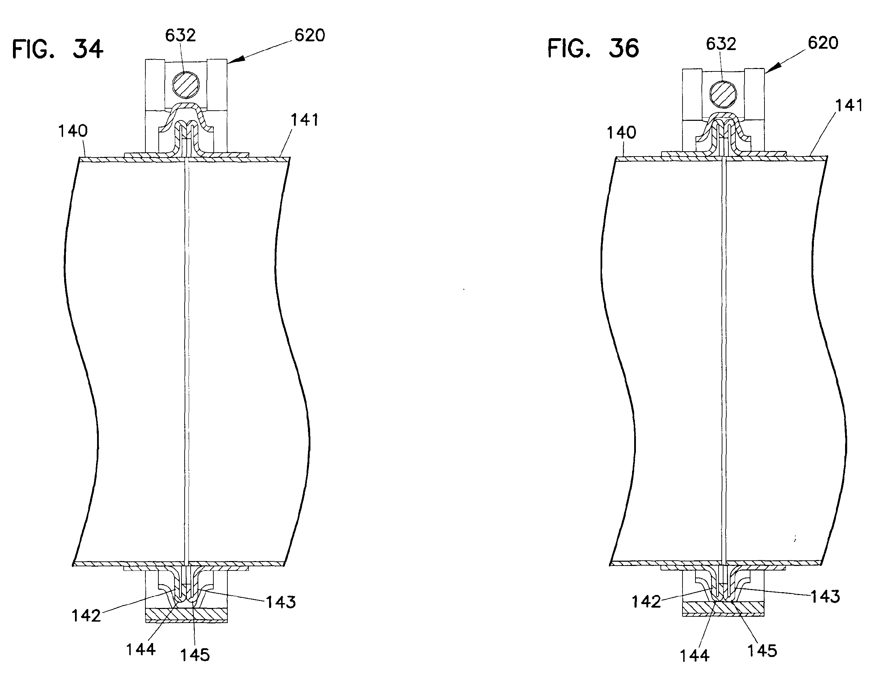

Figs. 33-36 illustrate the clamp 620 being used to couple together first and second conduits 140, 141. The conduits 140, 141 respectively include end flanges 142, 143 having outer rims 144, 145. Figs. 33 and 34 show the clamp 620 mounted about the conduits 140, 141 prior to final tightening. In the pre-tightened condition, end faces of the end flanges 142, 143 oppose one another and the centering members 660 of the clamp 620 engage the outer rims 144, 145 of the flanges 142, 143. By engaging the outer rims 144, 145, the members 660 function to center the flanges 142, 143 within the clamp 620 and to maintain alignment between the conduits 140, 141. Prior to final tightening, the centering members 660 also maintain an offset between the end flanges 142, 143 and side walls of the channel segments 636a-636c in a manner similar to the tabs 160 of the embodiment of Fig. 3.

To tighten the clamp 620, the fastener 632 is turned within the trunions 628, 630 causing the looped ends 624, 626 of the strap 622 to be drawn together. As the clamp 620 is tightened, the diameter of the band structure 623 decreases, such that the offset between the end flanges 142, 143 and the channel segments 636a-636c reduces. As the offset reduces, the centering members 660 are forced radially outwardly (e.g., by contact with the rims 144, 145) from the position of FIG. 33 to the position of FIG. 35. During tightening, the strap 622 elastically flexes and stretches outwardly to accommodate the outwardly movement of the centering members 660 relative to the channels 626a-636c. Spot welds 690 for connecting the channels 636a-636c to the strap 622 are positioned to allow portions 691 of the strap 622 to flex away from the channels 636a-636c to accommodate the centering members 660. In one embodiment, the spot welds 690 can be offset about an inch from the ends of the channels 636a-636c. During the entire tightening process, the centering members 660 continue to engage the outer rims 144, 145 of the end flanges 142, 143 such that the end flanges 142, 143 remain centered within the clamp 620 and aligned relative to one another. In this manner, the centering members 660 simultaneously apply radially inwardly directed forces to the rims 144, 145 at discrete locations about the circumference of the flanges 142, 143. The tightening process continues until the end flanges 142, 143 are clamped firmly against the channel segments 636a-636c as shown at Fig. 36. When the clamp 620 is removed, the strap 622 preferably flexes back to the pre-tightened orientation of Fig. 33 to allow for re-use of the clamp 620.

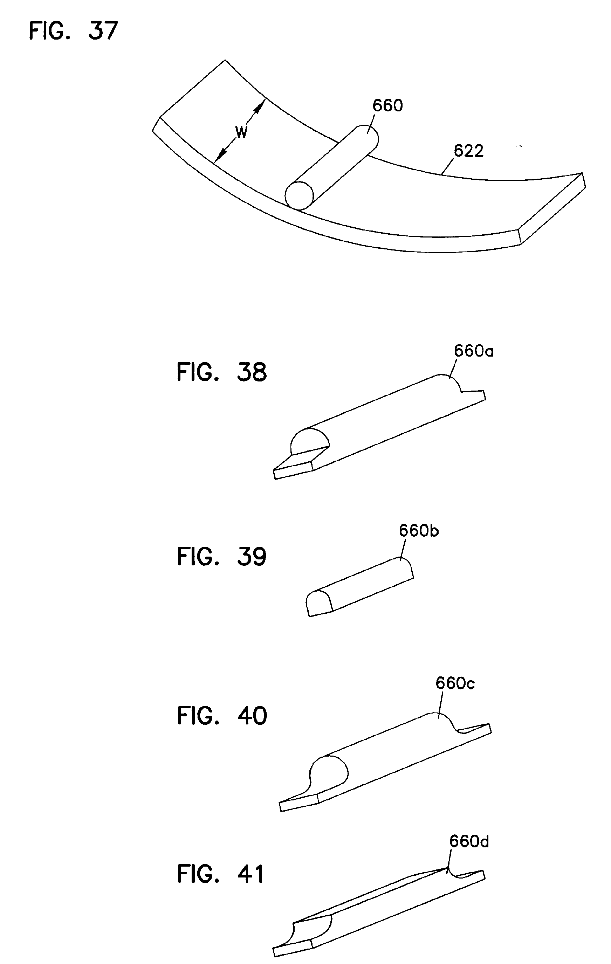

The centering members 660 of the embodiment of Figs. 33-36 are secured (e.g., welded such as spot or projection welded) to the inner surface of the strap 622. As shown in Figs. 33-36, the centering members include segments of wire secured to the strap 622 at the spacings between the channel segments 636a-636c. The wire segments are shown having generally round cross-sections and being mounted to extend across a width w of the strap 622 (see Fig. 37). Centering members 660a-660d having alternative shapes are shown in Figs. 38-41. The centering members 660a-660d are adapted to be secured across the width w of the strap 622 in a manner similar to the centering members 660. The centering member 660a has a curved flange contact surface (the top side), ramped/notched ends and a generally flat strap contact surface (the bottom side). The centering member 660b has a curved flange contact surface (the top side) a generally flat strap contact surface (the bottom side). The centering member 660c has a curved flange contact surface (the top side), notched ends, and a generally flat strap contact surface (the bottom side). The centering member 660d has a generally flat flange contact surface (the top side), ramped/notched ends and a generally flat strap contact surface (the bottom side). The centering members can also include rear projections (not shown) to facilitate resistance/projection welding the members to the strap 622.

From the forgoing detailed description, it will be evident that modifications and variations can be made in the devices of the disclosure without departing from the spirit or scope of the invention.

## Claims

1. A device for clamping together conduits having flanges, the device comprising:
a band structure defining a center reference point, the band structure including at least one channel member that curves about the center reference point, the channel member being adapted to receive the flanges of the conduits desired to be clamped together;
a fastener for tightening the at least one channel member about the conduits; and
a plurality of centering members that project into an interior region defined by the band structure, the centering members being adapted to engage the flanges to provide alignment between the conduits as the conduits are clamped together.

2. The device of claim 1, wherein the plurality of centering members includes at least three of the centering members spaced about a diameter of the band structure.

3. The device of claim 1, wherein the plurality of centering members includes three of the centering members spaced generally 120 degrees apart about a diameter of the band structure.

4. The device of claim 1, wherein the band structure includes a strap that curves about the center point, and the band structure also includes a plurality of the channel members, the channel members being secured to an inner side of the strap.

5. The device of claim 4, wherein the centering members comprise tabs that are integrally connected with the strap.

6. The device of claim 5, wherein the tabs have a cantilevered configuration and include base ends that are integral with the strap.

7. The device of claim 5, wherein the strap defines holes for allowing the tabs to be reset to allow the device to be reused.

8. The device of claim 1, wherein the centering members move radially outwardly as the at least one channel member is tightened about the conduits.

9. The device of claim 4, wherein the centering members comprise tabs that are integral with the channel members.

10. The device of claim 9, wherein the tabs have a cantilevered configuration and include base ends that are integral with the channel members.

11. The device of claim 10, wherein the strap defines holes for allowing the tabs to be reset to allow the device to be reused.

12. The device of claim 4, wherein the strap includes looped ends.

13. The device of claim 12, wherein trunions are positioned within the looped ends.

14. The device of claim 13, wherein the trunions include a first trunion defining an internally threaded opening and a second trunion defining a clearance opening, and wherein the fastener includes a threaded member that passes through the second trunion and is threaded within the first trunion.

15. The device of claim 14, wherein the threaded member comprises a cap screw.

16. The device of claim 14, wherein the second trunion includes fastener head seating surfaces positioned at both ends of the clearance opening.

17. The device of claim 4, wherein the centering members are secured to the inner surface of the strap at locations between the channel members.

18. The device of claim 16, wherein the channel members include three channel members separated by spacings, and wherein the centering members are located at the spacings and are arranged generally 120 degrees apart from one another.

19. A clamp for clamping together conduits having flanges, the device comprising:
a strap that curves about a center reference point, strap including first and second looped ends, the strap also including an inner side that faces toward the center reference point;
a three channel members secured to the inner side of the strap, the channel members defining channels that open toward the center point, the channels being adapted to receive the flanges of the conduits desired to be clamped together, the channel members being separated by spacings;
centering members connected to the strap at locations adjacent each of the spacings between the channel members;
a first trunion mounted at the first looped end of the strap;
a second trunion mounted at the second looped end of the strap; and
a threaded fastener for drawing together the first and second looped ends of the strap together to tighten the clamp about the conduits.

20. A clamp for clamping together conduits having flanges, the device comprising:
a strap that curves about a center reference point, strap including first and second looped ends, the strap also including an inner side that faces toward the center reference point;
a plurality of channel members secured to the inner side of the strap, the channel members defining channels that open toward the center point, the channels being adapted to receive the flanges of the conduits desired to be clamped together;
a first trunion mounted at the first looped end of the strap, the first trunion defining an internally threaded opening;
a second trunion mounted at the second looped end of the strap, the second trunion defining a clearance opening; and
a threaded fastener for drawing together the first and second looped ends of the strap together to tighten the clamp about the conduits, the threaded fastener being configured to pass through the clearance hole of the second trunion and be threaded within the internally threaded opening of the first trunion, the threaded fastener including a material having a tensile strength of at least about 120,000 pounds per square inch.

21. The clamp of claim 20, wherein the threaded fastener has a tensile strength of at least about 170,000 pounds per square inch.

22. The clamp of claim 20, wherein the threaded fastener includes coarse threads.

23. The clamp of claim 20, wherein the threaded fastener includes an antifriction coating.

24. A clamp for clamping together conduits having flanges, the device comprising:
a strap that curves about a center reference point, strap including first and second looped ends, the strap also including an inner side that faces toward the center reference point;
a plurality of channel members secured to the inner side of the strap, the channel members defining channels that open toward the center point, the channels being adapted to receive the flanges of the conduits desired to be clamped together;
a first trunion mounted at the first looped end of the strap, the first trunion defining an internally threaded opening;
a second trunion mounted at the second looped end of the strap, the second trunion defining a clearance opening;
a threaded fastener for drawing together the first and second looped ends of the strap together to tighten the clamp about the conduits, the threaded fastener being configured to pass through the clearance hole of the second trunion and be threaded within the internally threaded opening of the first trunion; and
a dry, non-metallic, friction-reducing coating provided on the threaded fastener.

25. A method for clamping together first and second flanged conduits, the first and second flanged conduits including first and second flanges having first and second outer rims, the method comprising:
opposing the first and second flanges;
positioning at least one channel member over the opposed flanges;
applying a plurality of discrete inwardly directed radial forces to the first and second outer rims to provide alignment between the first and second flanges while maintaining an offset from the first and second flanges and the at least one channel member; and
tightening the at least one channel member about the first and second flanges to close the offset and clamp the first and second flanges within the at least one channel member.

26. The clamp of claim 19, wherein the centering members are affixed to the strap.

27. The clamp of claim 19, wherein the strap flexes away from the channels at locations adjacent the centering members when the clamp is tightened.

28. The clamp of claim 27, wherein the strap automatically returns the centering members generally back to a pre-use position when the clamp is removed from a first application.

29. The clamp of claim 26, wherein the centering members are welded to the strap.
